# EUROPEAN PATENT APPLICATION

(11) **EP 4 509 367 A1**
(43) Date of publication of application: **19.02.2025**
(21) Application number: 23806999.1
(22) Date of filing: 17.05.2023
(51) Int. Cl.: B60R 13/04, B62D 27/02

(54) **NEW WINDOW FRAME DECORATIVE STRIP, NEW WINDOW FRAME DECORATIVE STRIP STRUCTURE, VEHICLE AND MOUNTING METHOD**

(30) Priority: 17.05.2022 CN 202210539679
(71) Applicant: ZHEJIANG ZEEKR INTELLIGENT TECHNOLOGY CO., LTD., Ningbo, Zhejiang 315899 (CN); ZHEJIANG GEELY HOLDING GROUP CO., LTD, Hangzhou, Zhejiang 310051 (CN)
(72) Inventor: ZHANG, Ruijuan, Ningbo, Zhejiang 315899 (CN); LI, Guolin, Ningbo, Zhejiang 315899 (CN); ZHANG, Zhichao, Ningbo, Zhejiang 315899 (CN); HU, Jing, Ningbo, Zhejiang 315899 (CN); LIU, Yanbo, Ningbo, Zhejiang 315899 (CN); LIU, Deli, Ningbo, Zhejiang 315899 (CN); HUANG, Chuxin, Ningbo, Zhejiang 315899 (CN); LI, Guihao, Ningbo, Zhejiang 315899 (CN)
(74) Representative: Dai, Simin
(86) International application number: PCT/CN2023/094844
(87) International publication number: WO 2023/222048

(57) **Abstract**

The present invention relates to a new window frame decorative strip, a new window frame decorative strip structure, a vehicle and a mounting method. The window frame decorative strip comprises a window frame decorative strip body and a window frame bright strip, wherein the window frame decorative strip body comprises a side wall and a mounting portion; the window frame decorative strip body is fixed to a vehicle door outer panel by means of the mounting portion; the window frame bright strip is detachably arranged on the mounting portion; and the window frame decorative strip body and the vehicle door outer panel form a guide groove structure. The window frame decorative strip is firmly fixed onto the vehicle door outer panel by fixing a mounting member to a fixing member; moreover, the window frame bright strip and the window frame decorative strip body are separately arranged, such that the window frame bright strip can first be spray-coated and then clamped to complete fixation, thereby satisfying the requirements of users for different colors.

## Description

### CROSS REFERENCE TO RELATED APPLICATIONS

This application claims priority to Chinese Patent Application No. CN202210539679.6 entitled "NEW WINDOW FRAME DECORATIVE STRIP, NEW WINDOW FRAME DECORATIVE STRIP STRUCTURE, VEHICLE AND MOUNTING METHOD" filed on May 17, 2022, the entire content of which is incorporated herein by reference.

### TECHNICAL FIELD

The present disclosure relates to the technical field of vehicle parts and in particular to a new window frame trim strip, a new window frame trim strip structure, a vehicle and a mounting method.

### BACKGROUND

The trim strips mounted on the outside of vehicle doors in the current industry are usually molded as C-shaped mounting structure by performing co-extrusion on stainless steel and soft PVC. Such mounting structures can only be fitted to the vehicle doors with rolled window frames but cannot be fitted to the integrated stamped vehicle doors. Further, the conventional window frame trim strips are stuck with adhesive tapes, leading to unsecure fixing.

Furthermore, along with continuous development of the vehicle industry, people not only focus on the basic performances of the vehicles but also have higher and higher requirements for the external vehicle appearances. The bright strips formed by conventional composite co-extrusion cannot be surface-treated in subsequent processes, failing to satisfy the requirements of the users for diverse colors.

Therefore, in order to address the above technical problems, it is necessary to provide a new window frame trim strip capable of satisfying assembling security on the integrated stamped vehicle doors and providing more color solutions to the users.

### SUMMARY

In order to solve the above technical problems, the present disclosure provides a new window frame trim strip, which solves technical problems that the window frame trim strips cannot be reliably stuck by adhesive tape, the bright strips formed by conventional composite ex-extrusion cannot be surface-treated in subsequent process and the requirements of the users for multiple colors cannot be satisfied in the prior arts.

The technical effects of the present disclosure are achieved by the following technical solutions.

There is provided a new window frame trim strip, mounted to an integrated stamped vehicle door and comprising: a window frame trim strip body and a window frame bright strip for decorating a window frame, wherein the window frame trim strip body comprises a sidewall and a mounting portion, a preset angle is formed between the sidewall and the mounting portion, the window frame trim strip body is fixed to the vehicle door outer panel by the mounting portion, the window frame bright strip is detachably disposed on the mounting portion, and the window frame trim strip body and the vehicle door outer panel form a guide groove structure in which a glazing tape is fitted.

The window frame bright strip and the window frame trim strip body are separately disposed such that the window frame bright strip can be sprayed and then fixedly fitted to satisfy the requirements of the users for different colors, which solves the problem that the conventional C-shaped trim strip cannot be surface-treated in subsequent process in the prior arts. Due to the preset angle between the sidewall and the mounting portion, the guide groove structure is formed between the window frame trim strip body and the vehicle door outer panel to provide a mounting structure for the glazing tape. In this way, the conventional guide rail can be replaced, making the entire structure of the window frame trim strip simpler, easier to implement and less in costs.

In an embodiment, an end of the sidewall facing toward an end of the vehicle door outer panel has a height higher than a plate surface of the mounting portion, such that the sidewall is connected to the mounting portion via a first bending portion which is bent downwards; an end of the sidewall away from the vehicle door outer panel is bent along a direction close to the glazing tape to form a second bending portion, and the window frame bright strip is fitted to the sidewall through the first bending portion and the second bending portion of the sidewall.

In an embodiment, a first rubber body is covered on the first bending portion, and a second rubber body is covered on the second bending portion; when the window frame bright strip is fitted onto the sidewall, the first rubber body and the second rubber body are sandwiched between the window frame bright strip and the sidewall.

In an embodiment, a mounting hole is disposed on the mounting portion, and the mounting portion is fixed to a fixing piece of the vehicle door outer panel by the mounting hole and a mounting piece so as to fix the window frame trim strip body to the vehicle door outer panel.

In an embodiment, the fixing piece is one of a nut seat and a screw, and the mounting piece is the other of the nut seat and the screw. The mounting hole is disposed on the mounting portion, and the window frame trim strip body is fixed to the vehicle door outer panel in a more stable manner by screwing the mounting piece and the fixing piece, which solves the problem that the window frame trim strip is affixed to the vehicle door outer panel with adhesive tape, and effectively avoids the problem that the window frame trim strip is aging and falling off.

In an embodiment, an end of the first rubber body close to the glazing tape is warped up to form a recess for accommodating an end of the window frame bright strip on the first rubber body; when the window frame bright strip is fitted to the sidewall, the end of the window frame bright strip is inserted into the recess.

The end of the first rubber body close to the glazing tape is warped up to form the recess for accommodating the end of the window frame bright strip on the first rubber body; when the window frame bright strip is fitted to the sidewall, the end of the window frame bright strip is inserted into the recess, so as to provide a good sealing effect.

In an embodiment, the warping end of the first rubber body is abutted against the vehicle door outer panel, and the first rubber body is in interference fit with the vehicle door outer panel.

In an embodiment, along an X direction of the vehicle, the sidewall extends longer than the mounting portion; and the end of the sidewall going beyond the mounting portion is fitted by a fitting piece to the vehicle door outer panel.

The end of the sidewall is provided with fitting piece so that the end of the sidewall can be fitted onto the vehicle door outer panel by the fitting piece, and the end is fixed to the vehicle door outer panel, thereby effectively avoiding the end from warping up.

In an embodiment, the window frame trim strip body, the first rubber body and the second rubber body are an integral structure which is formed by composite co-extrusion molding process.

There is provided a new window frame trim strip structure, comprising a vehicle door outer panel, a vehicle door glass, a glazing tape and the above-mentioned new window frame trim strip mentioned, wherein the new window frame trim strip is screw-connected to the vehicle door outer panel, and the glazing tape is fitted into a guide groove structure formed by the window frame trim strip body and the vehicle door outer panel.

There is provided a vehicle, comprising the above-mentioned new window frame trim strip structure.

There is provided a mounting method of a new window frame trim strip, implemented based on the above-mentioned new window frame trim strip, and comprising:
processing the window frame trim strip body, the first rubber body and the second rubber body into an integral structure by composite co-extrusion molding process;
fitting the window frame bright strip to the first rubber body and the second rubber body to fix the window frame bright strip to the window frame trim strip body; and
inserting the mounting piece or the fixing piece through the mounting hole to fixedly connect the mounting piece and the fixing piece so as to fix the window frame trim strip body to the vehicle door outer panel, and performing an interference fit between the first rubber body and the vehicle door outer panel.

In an embodiment, the mounting method of the new window frame trim strip further comprises, before fitting the window frame bright strip to the first rubber body and the second rubber body to fix the window frame bright strip to the window frame trim strip body:
obtaining a color customization requirement of a user; and
based on the color customization requirement, performing spray processing on the surface of the window frame bright strip to obtain the window frame bright strip satisfying the color customization requirement of the user.

The present disclosure has the following beneficial effects.

With a mounting hole disposed on the mounting portion, a mounting piece can be screw-connected to a fixing piece to enable the window frame trim strip body to be stably fixed on the vehicle door outer panel. In this way, the operation of sticking the window frame trim strip to the vehicle door outer panel by the adhesive tape can be avoided, effectively solving the problem of aging and falling-off of the window frame trim strip.

The window frame bright strip and the window frame trim strip body are separately disposed such that the window frame bright strip can be sprayed and then fixedly fitted to satisfy the requirements of the users for different colors, which solves the problem that the conventional C-shaped trim strip cannot be surface-treated in subsequent process in the prior arts.

Due to the preset angle between the sidewall and the mounting portion, the guide groove structure is formed between the window frame trim strip body and the vehicle door outer panel to provide a mounting structure for the glazing tape. In this way, the conventional guide rail can be replaced, making the entire structure of the window frame trim strip simpler, easier to implement and less in costs.

### BRIEF DESCRIPTION OF THE DRAWINGS

In order to more clearly describe the technical solutions of the embodiments of the present disclosure, the drawings required for descriptions of the embodiments will be briefly introduced below. It should be understood that the drawings hereunder only illustrate some embodiments of the present disclosure and hence shall not be understood as limiting of the present disclosure. Those skilled in the arts can obtain other drawings based on these drawings without carrying out creative work.
FIG. 1 is a sectional view illustrating a new window frame trim strip according to an embodiment of the present disclosure.
FIG. 2 is a structural schematic diagram illustrating a new window frame trim strip according to an embodiment of the present disclosure.
FIG. 3 is a sectional view illustrating a C-shaped window frame trim strip according to an embodiment of the present disclosure.
FIG. 4 is a flowchart illustrating a mounting method of a new window frame trim strip according to an embodiment of the present disclosure.

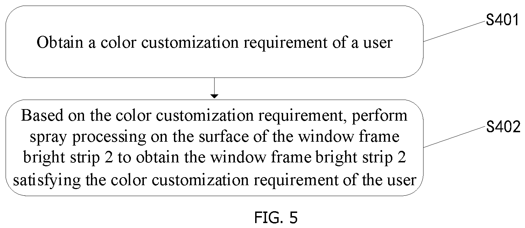

FIG. 5 is a flowchart illustrating steps of performing spraying on a window frame bright strip based on a color requirement of a user according to an embodiment of the present disclosure.

List of reference numerals:
window frame trim strip body 1; sidewall 11; first bending portion 111; second bending portion 112; fitting piece 113; mounting portion 12; mounting hole 121; first rubber body 13; second rubber body 14; window frame bright strip 2; vehicle door outer panel 3; fixing piece 4; mounting piece 5; vehicle door glass 6; glazing tape 7; rolled vehicle door 8; fitting position 81; guide rail 9; C-shaped window frame trim strip 10; outer trim surface 101; rubber body 102; adhesive tape 15.

### DETAILED DESCRIPTION OF THE EMBODIMENTS

Specific examples of the present disclosure will be described in detail below in combination with accompanying drawings. Obviously, the described implementations are only a part, but not all, of the implementations of the present disclosure. All other embodiments obtained by a person of ordinary skill in the art based on the embodiments of the present disclosure without creative efforts shall fall within the protection scope of the present disclosure.

In the descriptions of the present disclosure, it is noted that terms "disposing", "mounting" and "connection" shall be understood in a broad sense unless otherwise stated clearly. For example, the terms may refer to a fixed connection, and may also refer to a detachable connection or an integrated connection. The connection may be a mechanical connection or an electrical connection, and the connection may be a direct connection or an indirect connection through an intermediate medium. Persons of ordinary skill in the art may understand specific meanings of the above terms in the present disclosure according to a specific situation.

In the description of the present disclosure, it is to be understood that orientations or positional relationships indicated by terms such as "upper", "lower", "front", "rear", "left", "right", "top", "bottom", "inside", "outside", and the like are based on orientations or positional relationships shown in the drawings, or those customarily placed when the product of the present disclosure is used, and are used only for convenience and simplification of descriptions of the present disclosure, rather than indicate or imply that the indicated apparatus or element shall have a specific orientation and be configured or operated in a specific orientation. Thus, the terms shall not be construed as limiting of the present disclosure.

It should be understood that the terms "first", "second", etc. in the specification and claims as well as the drawings in this application are used to distinguish similar objects, and are not necessarily used to indicate a specific order or a sequential order. It should be understood that the data used in this way may be interchanged as appropriate, so that the examples of the present application described herein can be implemented, for example, in a sequence other than those illustrated herein. In addition, the terms "including", "having" and any variations thereof are intended to cover non-exclusive inclusion, e.g., a process, method, system, product or device that includes a series of steps or units need not be limited to those that are clearly listed, but may include other steps or units that are not clearly listed or inherent to those processes, methods, products or devices. Rather, it may include other steps or units that are not clearly listed or that are inherent to those processes, methods, products or devices.

### Embodiment 1

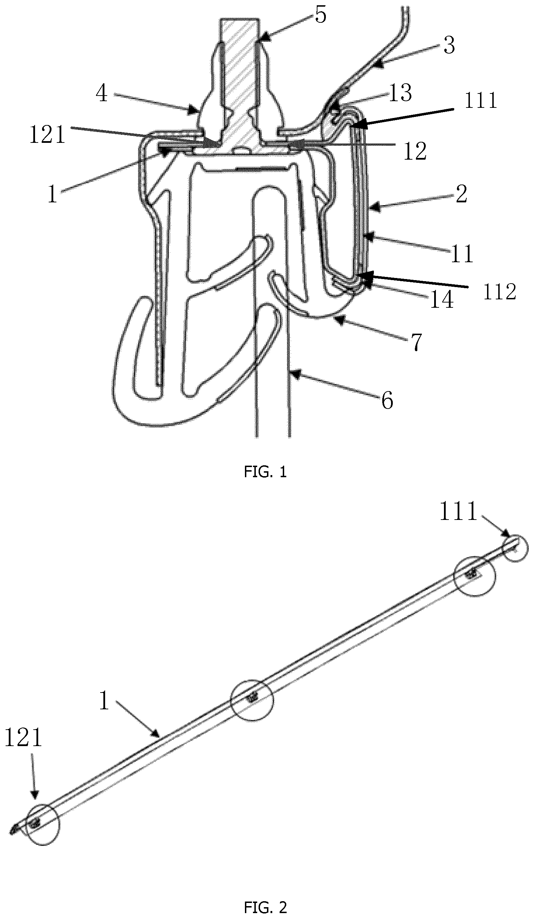

As shown in FIGS. 1 to 2, the embodiment of the present disclosure provides a new window frame trim strip which is mounted to an integrated stamped vehicle door. The new window frame trim strip includes a window frame trim strip body 1 and a window frame bright strip 2 for decorating a window frame. The window frame trim strip body 1 includes a sidewall 11 and a mounting portion 12 provided with a mounting hole 121. A preset angle is formed between the sidewall 11 and the mounting portion 12. The mounting portion 12 combines the window frame trim strip body 1 with a vehicle door outer panel 3 by the mounting hole 121 and a mounting piece 5 so as to fix the window frame trim strip body 1 to the vehicle door outer panel 3. The window frame bright strip 2 is detachably disposed on the mounting portion 12, and the window frame trim strip body 1 and the vehicle door outer panel 3 form a guide groove structure in which a glazing tape 7 is fitted.

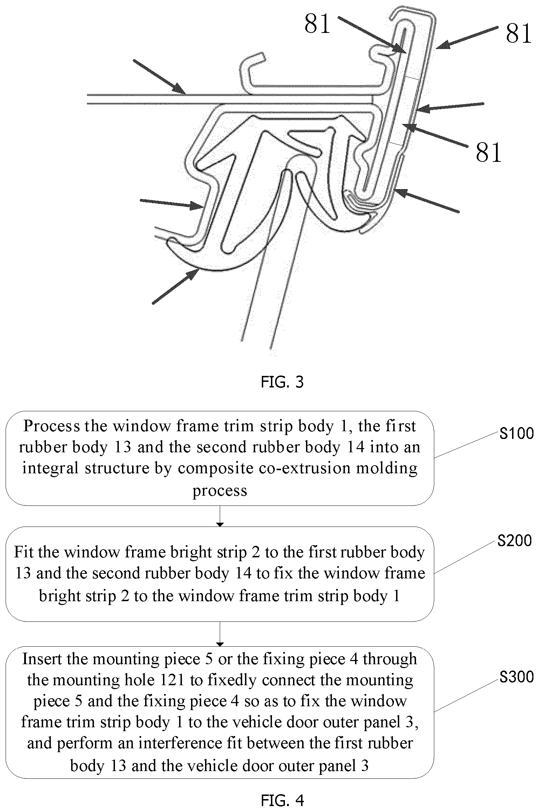

It should be noted that, as shown in FIG. 3, a conventional C-shaped window frame trim strip 10 in the prior arts is an integral trim strip which is directly fitted onto a rolled vehicle door 8. A mounting groove for mounting the glazing tape 7 is directly formed on the rolled vehicle door 8. The color of an outer trim surface 101 of the C-shaped window frame trim strip is the color of the C-shaped window frame trim strip. In order to ensure the C-shaped window frame trim strip has sealing effect, a rubber body 102 integrally formed on the C-shaped window frame trim strip 10 through co-extrusion process is present on the outer trim surface 101 of the C-shaped window frame trim strip. When a customer requests a different color, it is required to cover the area of the rubber body 102 when color spray is performed on the outer trim surface 101. But, in practical operations, it cannot be guaranteed that the rubber body 102 is exactly overlapped with the covering. In this case, it is possible that color is sprayed on the rubber body 102 or a partial region of the outer trim surface 101 covered by the rubber body 102 is not sprayed in the spraying process.

In the present disclosure, the window frame bright strip 2 for decorating the window frame and the window frame trim strip body 1 are separately disposed, and the window frame trim strip body 1 is directly fixed on the vehicle door outer panel 3 and then the window frame bright strip 2 is detachably is disposed on the window frame trim strip body 1. When a different color is requested, the window frame bright strip 2 is firstly sprayed and then the window frame bright strip 2 is disposed on the window frame trim strip body 1. In this way, the problem that the conventional C-shaped window frame trim strip in the prior arts cannot be surface-treated after being fixed on the rolled vehicle door 8 can be solved.

Specifically, as shown in FIG. 1, the preset angle is 80 to 120 degrees, and preferably, 90 degrees. An L-shaped structure is substantially formed by the sidewall 11 and the mounting portion 12. A metal sheet at a side of the glazing tape 7 away from the window frame bright strip 2 on the vehicle door outer panel 3 extends downward. A Ω-shaped structure, i.e. the guide groove structure, for fitting the glazing tape 7 therein is formed jointly by the L-shaped structure and the vehicle door outer panel 3.

More specifically, in this embodiment, an end of the sidewall 11 facing toward an end of the vehicle door outer panel 3 has a height higher than a plate surface of the mounting portion 12, such that the sidewall 11 is connected to the mounting portion 12 via a downward-extending first bending portion 111. An end of the sidewall 11 away from the vehicle door outer panel 3 is bent along a direction close to the glazing tape 7 to form a second bending portion 112. That is, the first bending portion 111 and the second bending portion 112 are respectively disposed at both ends of the sidewall 11. The window frame bright strip 2 is fitted to the sidewall 11 through the first bending portion 111 and the second bending portion 112 of the sidewall 11. With the above disposal, the window frame bright strip 2 is fully covered on a side surface of the sidewall 11 away from the glazing tape 7. Compared with the existing technology in FIG. 3, any rubber body 102 will be no longer covered on the window frame bright strip 2, improving the aesthetics.

Furthermore, a first rubber body 13 is covered on the first bending portion 111, and a second rubber body 14 is covered on the second bending portion 112. When the window frame bright strip 2 is fitted onto the sidewall 11, the first rubber body 13 and the second rubber body 14 are sandwiched between the window frame bright strip 2 and the sidewall 11. In this way, on the one hand, the combination security degree between the window frame bright strip 2 and the sidewall 11 can be improved by deformation and on the other hand, the sealing performance between the window frame bright strip 2 and the sidewall 11 can also be strengthened.

Specifically, the window frame trim strip body 1 may be made of stainless steel material.

In this embodiment, the new window frame trim strip further includes a fixing piece 4 fixed on the mounting hole 121 of the vehicle door outer panel 3, and the fixing piece 4 is combined with the mounting piece 5 to fix the window frame trim strip body 1 on the vehicle door outer panel 3.

Specifically, the fixing piece 4 may be a nut seat fixedly fitted to the vehicle door outer panel 3 and the mounting piece 5 may be a screw. The screw is inserted through the mounting hole 121 to be thread-connected with the nut seat, so as to fix the window frame trim strip body 1 to the vehicle door outer panel 3.

In some other embodiments, the fixing piece 4 may also be a screw riveted to the vehicle door outer panel 3, and the mounting piece 5 may also be a nut. The screw is inserted through the mounting hole 121 of the window frame trim strip body 1 and then thread-connected with the nut so as to fix the window frame trim strip body 1 to the vehicle door outer panel 3.

It should be noted that, as shown in FIG. 3, the mounting process of the conventional C-shaped window frame trim strip 10 includes: hanging upper and lower clamping feet of the C-shaped window frame trim strip 10 onto a fitting position 81 of vertical direction on the rolled vehicle door 8, and sticking a middle region of the C-shaped window frame trim strip 10 by an adhesive tape 15 to a corresponding position of the rolled vehicle door 8. After the C-shaped window frame trim strip 10 is mounted, a guide rail 9 withΩ-shaped structure is mounted below the rolled vehicle door 8, and then the glazing tape is mounted in the guide rail 9.

In the present disclosure, the nut seat is pre-mounted to the vehicle door outer panel 3 and then the self-tapping screw is inserted through the mounting hole 121 of the window frame trim strip body 1 to be locked to the vehicle door outer panel 3. Therefore, in the present disclosure, the mounting portion 12 is provided with the mounting hole 121, and the mounting piece 5 is thread-connected with the fixing piece 4 to stably fix the window frame trim strip body 1 to the vehicle door outer panel 3. In this way, the operation of sticking the window frame trim strip to the vehicle door outer panel by the adhesive tape can be avoided, effectively solving the problem of aging and falling-off of the window frame trim strip. Due to the preset angle between the sidewall 11 and the mounting portion 12, the guide groove structure is formed between the window frame trim strip body 1 and the vehicle door outer panel 3 to provide a mounting structure for the glazing tape 7. In this way, the conventional guide rail can be replaced, making the entire structure of the window frame trim strip simpler, easier to implement and less in costs.

Specifically, an end of the first rubber body 13 close to the glazing tape 7 is warped up to form a recess for accommodating an end of the window frame bright strip 2 on the first rubber body 13. When the window frame bright strip 2 is fitted to the sidewall 11, the end of the window frame bright strip 2 is inserted into the recess. In other words, the first rubber body 13 wraps the upper end of the window frame bright strip 2. The warping end of the first rubber body 13 is abutted against the vehicle door outer panel 3, that is, the first rubber body 13 is in interference fit with the vehicle door outer panel 3 to further improve the sealing performance of the new window frame trim strip.

Specifically, the first rubber body 13 and the second rubber body 14 are made of TPV material.

Specifically, the first rubber body 13 and the second rubber body 14 may be an integral rubber body which has a uniform thickness distribution in the middle position of the window frame bright strip 2.

Preferably, the window frame trim strip body 1, the first rubber body 13 and the second rubber body 14 may be an integral structure which is formed by composite co-extrusion molding process.

Preferably, along an X direction of the vehicle, the sidewall 11 extends longer than the mounting portion 12; a hole is opened at a position corresponding to the end of the sidewall 11 on the vehicle door outer panel 3, and the end of the sidewall 11 going beyond the mounting portion 12 is fitted by a fitting piece 113 into the hole at the corresponding position on the vehicle door outer panel 3.

Specifically, as shown in FIG. 2, along the X direction of the vehicle, multiple mounting holes 121 are arranged in a spacing on the window frame trim strip body 1, for example, three mounting holes 121 are arranged. Thus, the window frame trim strip body 1 can be fixed to the vehicle door outer panel 3 by three mounting holes 121 and one fitting piece 113.

As shown in FIG. 3, the embodiment of the present disclosure further provides a mounting method of a new window frame trim strip. The method is implemented based on the new window frame trim strip in the embodiment 1. The method includes the following steps S100 to S300.

At step S100, the window frame trim strip body 1, the first rubber body 13 and the second rubber body 14 are processed into an integral structure by composite co-extrusion molding process.

At step S200, the window frame bright strip 2 is fitted to the first rubber body 13 and the second rubber body 14 to fix the window frame bright strip 2 to the window frame trim strip body 1.

At step S300, the mounting piece 5 or the fixing piece 4 is inserted through the mounting hole 121 to fixedly connect the mounting piece 5 and the fixing piece 4 so as to fix the window frame trim strip body 1 to the vehicle door outer panel 3. At the same time, the first rubber body 13 is in interference fit with the vehicle door outer panel 3.

It is to be noted that the steps S200 and S300 can be exchanged in sequence, that is, the window frame trim strip body 1 is fixed and then the window frame bright strip 2 is fitted.

As shown in FIG. 4, in a specific implementation, before the step S300 of fitting the window frame bright strip 2 to the first rubber body 13 and the second rubber body 14 to fix the window frame bright strip 2 to the window frame trim strip body 1, the following steps S401 and S402 are included.

At step S401, a color customization requirement of a user is obtained.

At step S402, based on the color customization requirement, spray processing is performed on the surface of the window frame bright strip 2 to obtain a window frame bright strip 2 satisfying the color customization requirement of the user.

Furthermore, after the vehicle is delivered, if the user has a requirement for changing the color of the window frame bright strip 2, it is not required to remove the window frame trim strip body 1 but directly change the window frame bright strip 2. The color change process of the new window frame trim strip is simple, helping improve the user experience.

### Embodiment 2

The embodiment of the present disclosure provides a new window frame trim strip structure, which includes a vehicle outer panel 3, a vehicle door glass 6, a glazing tape 7 and the new window frame trim strip of the embodiment 1. A mounting hole 121 is formed on the vehicle door outer panel 3 and a fixing piece 4 is fixed on the mounting hole 121. The new window frame trim strip is fixed on the vehicle door outer panel 3 by combination of a mounting piece 5 and the fixing piece 4, for example, by screw connection; and the glazing tape 7 is fitted into a guide groove structure formed by the window frame trim strip body 1 and the vehicle door outer panel 3.

### Embodiment 3

The embodiment of the present disclosure provides a vehicle, which includes the new window frame trim strip structure in the embodiment 2. By using the new window frame trim strip structure of the present disclosure, more color solutions can be provided to the users while the assembling security to the integrated stamped vehicle door of the vehicle is guaranteed.

Although the present disclosure has been described by preferred embodiments, the present disclosure is not limited to the embodiments described here, but also includes various changes and variations made without departing from the scope of the present disclosure.

In the present disclosure, the directional words, such as "upper", "lower", "front" and "rear", are defined by the position of the parts in the drawings and between the parts, just to express the clarity and convenience of the technical solution. It should be understood that the use of the locative words should not limit the scope of the present disclosure.

In a case of no conflicts, the above embodiments and characteristics in the embodiments may be mutually combined.

Preferred embodiments of the present disclosure are described herein, of course, this can not be used to limit the scope of the claims of the present disclosure, and therefore, the equivalent changes according to the claims of the present disclosure are still covered by the scope of the present disclosure.

## Claims

1. A new window frame trim strip, mounted to an integrated stamped vehicle door and comprising: a window frame trim strip body (1) and a window frame bright strip (2) for decorating a window frame, wherein the window frame trim strip body (1) comprises a sidewall (11) and a mounting portion (12), a preset angle is formed between the sidewall (11) and the mounting portion (12), the window frame trim strip body (1) is fixed to the vehicle door outer panel (3) by the mounting portion (12), the window frame bright strip (2) is detachably disposed on the mounting portion (12), and the window frame trim strip body (1) and the vehicle door outer panel (3) form a guide groove structure in which a glazing tape (7) is fitted.

2. The new window frame trim strip of claim 1, wherein an end of the sidewall (11) facing toward an end of the vehicle door outer panel (3) has a height higher than a plate surface of the mounting portion (12), such that the sidewall (11) is connected to the mounting portion (12) via a first bending portion (111) which is bent downwards; an end of the sidewall (11) away from the vehicle door outer panel (3) is bent along a direction close to the glazing tape (7) to form a second bending portion (112), and the window frame bright strip (2) is fitted to the sidewall (11) through the first bending portion (111) and the second bending portion (112) of the sidewall (11).

3. The new window frame trim strip of claim 2, wherein a first rubber body (13) is covered on the first bending portion (111), and a second rubber body (14) is covered on the second bending portion (112); when the window frame bright strip (2) is fitted onto the sidewall (11), the first rubber body (13) and the second rubber body (14) are sandwiched between the window frame bright strip (2) and the sidewall (11).

4. The new window frame trim strip of claim 1, wherein a mounting hole (121) is disposed on the mounting portion (12), and the mounting portion (12) is fixed to a fixing piece (4) of the vehicle door outer panel (3) by the mounting hole (121) and a mounting piece (15) so as to fix the window frame trim strip body (1) to the vehicle door outer panel (3).

5. The new window frame trim strip of claim 4, wherein the fixing piece (4) is one of a nut seat and a screw, and the mounting piece (5) is the other of the nut seat and the screw.

6. The new window frame trim strip of claim 3, wherein an end of the first rubber body (13) close to the glazing tape (7) is warped up to form a recess for accommodating an end of the window frame bright strip (2) on the first rubber body (13); when the window frame bright strip (2) is fitted to the sidewall (11), the end of the window frame bright strip (2) is inserted into the recess.

7. The new window frame trim strip of claim 6, wherein the warping end of the first rubber body (13) is abutted against the vehicle door outer panel (3), and the first rubber body (13) is in interference fit with the vehicle door outer panel (3).

8. The new window frame trim strip of claim 1, wherein along an X direction of the vehicle, the sidewall (11) extends longer than the mounting portion (12); and the end of the sidewall (11) going beyond the mounting portion (12) is fitted by a fitting piece (111) to the vehicle door outer panel (3).

9. The new window frame trim strip of claim 3, wherein the window frame trim strip body (1), the first rubber body (13) and the second rubber body (14) are an integral structure which is formed by composite co-extrusion molding process.

10. A new window frame trim strip structure, comprising a vehicle door outer panel (3), a vehicle door glass (6), a glazing tape (7) and the new window frame trim strip mentioned according to any one of claims 1 to 6, wherein the new window frame trim strip is screw-connected to the vehicle door outer panel (3), and the glazing tape (7) is fitted into a guide groove structure formed by the window frame trim strip body (1) and the vehicle door outer panel (3).

11. A vehicle, comprising the new window frame trim strip structure according to claim 7.

12. A mounting method of a new window frame trim strip, implemented based on the new window frame trim strip according to any one of claims 3 to 9, and comprising:
processing a window frame trim strip body (1), a first rubber body (13) and a second rubber body (14) into an integral structure by composite co-extrusion molding process;
fitting a window frame bright strip (2) to the first rubber body (13) and the second rubber body (14) to fix the window frame bright strip (2) to the window frame trim strip body (1); and
inserting a mounting piece (5) or a fixing piece (4) through a mounting hole (121) to fixedly connect the mounting piece (5) and the fixing piece (4) so as to fix the window frame trim strip body (1) to a vehicle door outer panel (3), and performing an interference fit between the first rubber body (13) and the vehicle door outer panel (3).

13. The mounting method of the new window frame trim strip of claim 9, further comprising, before fitting the window frame bright strip (2) to the first rubber body (13) and the second rubber body (14) to fix the window frame bright strip (2) to the window frame trim strip body (1):
obtaining a color customization requirement of a user; and
based on the color customization requirement, performing spray processing on the surface of the window frame bright strip (2) to obtain the window frame bright strip (2) satisfying the color customization requirement of the user.
